# EUROPEAN PATENT APPLICATION

(11) **EP 1 666 680 A1**
(43) Date of publication of application: **07.06.2006**
(21) Application number: 04078293.0
(22) Date of filing: 03.12.2004
(51) Int. Cl.: E04D 3/362, H01L 31/048, F24J 2/04, H01L 31/058

(54) **Assembly of a building member for constructing a standing seam roof and an exchangeable module**

(71) Applicant: Corus Bausysteme GmbH, 56070 Koblenz (DE)
(72) Inventor: Neuwald, Jürgen, 56068 Koblenz (DE)
(74) Representative: van der Donk, Henricus Matheus

(57) **Abstract**

Assembly of a building member for constructing a standing seam roof, and an exchangeable module, the building member comprising upstanding flanges on opposite sides and a substantially flat intermediate portion between the upstanding flanges, the upstanding flanges being designed so as to co-operate with upstanding flanges of adjacent building members and form the standing seam, characterised in that the exchangeable module is mounted in the intermediate portion between the upstanding flanges and wherein the module is provided with means for absorbing solar energy.

## Description

The invention relates to an assembly of a building member for constructing a standing seam roof and an exchangeable module, the building member comprising upstanding flanges on opposite sides and a substantially flat intermediate portion between the flanges, the flanges being designed so as to co-operate with flanges of adjacent building members and form the standing seam. The invention also relates to an exchangeable module for mounting between upstanding flanges of a standing seam roof, and to the use of said assembly.

Modern buildings are often provided with a standing seam roof. These roofs are made from substantially flat building elements, wherein the building elements are provided with upstanding flanges along opposite sides and a substantially flat intermediate portion between the flanges. The flanges are designed so as to co-operate with flanges of adjacent building members, for instance with a male-female joint and form the standing seam. These standing seams extend over a substantial part of the roof and are substantially parallel. The building elements are usually made from a thin sheet of metal, such as steel, aluminium or an aluminium alloy.

The accumulation of heat in a conventional roof comprising ceramic or slate roofing tiles leads to a slow increase in temperature during the day and the release of the heat results in a slow decrease in temperature in the evening. On average, the building remains cooler during the day and warmer during the night. Especially in a hot climate, buildings provided with standing seam roofs have a tendency to become hot quickly when the roof is exposed to the sun. On the other hand, the heat disappears very quickly when the exposure to the sun stops. This leads to a rapid increase in temperature in the morning and a rapid decrease in temperature in the evening. The temperature fluctuations in the building are larger and faster than in buildings provided with a conventional roof comprising ceramic or slate roofing tiles for certain building structures. Controlling the climate in these buildings requires more extensive use of air conditioning during the day and heating during the night as compared to buildings with a conventional roof.

It is an object of the invention to provide an assembly of a building member for constructing a standing seam roof which enables a more efficient use of the solar energy absorbed by the roof.

According to the invention this object is reached by providing an assembly of a building member for constructing a standing seam roof, and an exchangeable module, the building member comprising upstanding flanges on opposite sides and a substantially flat intermediate portion between the upstanding flanges, the upstanding flanges being designed so as to co-operate with upstanding flanges of adjacent building members and form the standing seam, wherein the module is mounted in the intermediate portion between the upstanding flanges and wherein the exchangeable module is provided with means for absorbing solar energy.

The assembly according to the invention enables mounting a module between the flanges, and hence between the standing seams of the roof, wherein the module is provided with means for absorbing solar energy. The solar energy, which is absorbed by the solar energy absorbing means in the module between the seams, is therefore prevented from penetrating to the interior of the building.

In an embodiment of the invention the module is a box-shaped module. A box-shaped module has sufficient stiffness whilst allowing to mount means for absorbing solar energy in the box and offering protection to the contents of the box. The module may however also be a sheet-type or disc-type module provided with a support structure to support the module whilst being mounted between the standing seams. It may also be a U-type-box turned upside down, the legs of the U being substantially parallel to the standing seams and the opening of the U facing the roof.

In an embodiment of the invention the module has a height not exceeding the height of the standing seams of the roof, thereby allowing a smooth finish of the roof.

In an embodiment of the invention the module is wedged, preferably tightly wedged, between the upstanding flanges of the building member. In this embodiment the module covers the entire surface of the intermediate portion, thereby providing an effective shielding of the roof for the solar energy falling onto the roof. The arrangement wherein the module is wedged between the upstanding flanges enables an easy mounting procedure by snapping the box in between the flanges. The flexibility of the flanges enables some sideways flexing movement while wedging the box in between the flanges. In many cases, the standing seams comprise a thin portion at the location where the upstanding flanges of two adjacent building members lie against each other and a thicker head portion at the location where the two flanges are joined, for example with a male female joint. By tightly wedging the box in between the standing seams, the head portion may act as securing means, preventing the box from unwanted removal, for instance as a result of wind suction.

In an embodiment of the invention the module is fastenable to the building member using fastening means. It may be desirable to fasten the module to the building element by fastening means for instance if the box does not extend between both seams to enable a tightly wedged fit, or to provide additional fastening. The fastening means may comprise clamps, adhesive, screws. The fastening means may also comprise a brazed or welded connection.

In an embodiment of the invention the means for absorbing solar energy comprise a photovoltaic collector. In this embodiment at least part of the solar energy is converted in electrical energy, which may be used for the usual purposes. The module that is provided with a photovoltaic collector may be mounted between the standing seams of a standing seam roof over a large area, thereby providing a large electricity production whilst also preventing solar energy from entering the building in the form of heat. This embodiment also enables the solar energy absorbed by the roof during the day to be used at a later time and/or other location.

In an embodiment of the invention the means for absorbing solar energy comprise a thermal collector for heating a heat-absorbing medium. When providing at least a portion of the surface of the roof with modules being positioned in the intermediate portion between the flanges a significant amount of solar energy can be absorbed by the heat-absorbing medium, thereby providing a large thermal buffer whilst also preventing solar energy from entering the building in the form of heat. This embodiment emulates the thermal characteristics of a conventional roof comprising ceramic or slate roofing tiles. It should be noted that it is also possible to provide the module with a photovoltaic collector and a thermal collector, thereby absorbing as much solar energy as possible.

In an embodiment of the invention the assembly also comprises conduits for conducting the heat-absorbing medium between the thermal collector and a thermal accumulator for storing thermal energy. This embodiment allows for a very effective absorption of solar heat because the heat-absorbing medium is passable from the thermal collector through the conduit to a thermal accumulator for taking up and storing the heat from the heat-absorbing medium. The heat-absorbing medium is then passable through the conduit back to the thermal collector. The heat-absorbing medium may be a gas, such as air, or a liquid such as water, or even a solid.

In an embodiment of the invention the heat absorbing medium and/or the thermal accumulator comprises a phase change material for storing and retrieving thermal energy. A phase change material in the context of this invention is defined to be a material that is transformable from a first phase (fort instance solid) into a second phase (for instance liquid). During that phase change between the solid and liquid phase large quantities of thermal energy at nearly constant temperature, i.e. the melting temperature or phase transition temperature, can be stored and released. By selecting a suitable phase change material, the phase transition temperature can be selected, for instance 21 °C. Advantageous is that large quantities of thermal energy can be stored and released at a relatively constant temperature, even when limited volumes and low operating temperature differences are applicable. A known phase change material is paraffin, in which case the phase change is between the solid and liquid phase.

By using this phase change material as a heat absorbing medium in the thermal collector the amount of heat which can be absorbed and released by the thermal collector is very high thereby efficiently emulating the thermal characteristics of a conventional roof comprising ceramic or slate roofing tiles. The heat stored in the phase change material in the thermal collector may also be used to heat a second heat-absorbing medium, which is circulated through the conduits to and from the thermal accumulator. By using this phase change material in the thermal accumulator, the circulating gaseous or liquid heat-absorbing medium can exchange heat with the phase change material. Since this phase change material has a very high thermal capacity, the amount of heat that can be stored is very large. This heat can be used for heating purposes, for instance for heating water to provide hot water for domestic or industrial purposes, or for heating the building if and when required.

According to a second aspect of the invention, there is provided an exchangeable module, preferably box-shaped, for mounting between upstanding flanges of a standing seam roof as described above, wherein the module comprises means for absorbing solar energy. This module is provided with the means for absorbing solar energy prior to mounting between the upstanding flanges of a standing seam roof and can be mounted quickly and easily because the standing seam roof is substantially based on standardised dimensions. The modules can therefore be produced off-site and in standard dimensions.

In an embodiment of the invention the module comprises a thermal collector for heating a heat absorbing medium and/or a photovoltaic collector.

In an embodiment of the invention the module comprises at least one input conduit and at least one output conduit for conducting the heat absorbing medium, wherein the heat absorbing medium after having absorbed solar energy, is passable to a thermal accumulator or to a conversion unit wherein the solar energy is convertible into energy of a different type. In this embodiment, the conduits of adjacent modules on the roof should be connectable to each other, for instance by a quick-lock or bayonet-type connection, and to a thermal accumulator or to a conversion unit. In the case of electricity generated by the photovoltaic collector may be passed through the conduits, i.e. the electric wiring, to a conversion unit for conversion into energy of a different type, to an accumulator for storing for later use, or to an electronic device for immediate use, for instance to an air-conditioning unit.

In an embodiment of the invention the heat-absorbing medium comprises phase change materials. These phase change materials were found to have a very high thermal capacity and able to efficiently emulate the thermal characteristics of a conventional roof comprising ceramic or slate roofing tiles.

It should be noted that the exchangeable module may also be empty, in which case a dummy module is created. This dummy module may be used to temporarily replace defective modules, or to use on locations of the roof where a proper module is not yet mounted or mountable, the latter being for either technical reasons or efficiency reasons. Technical reasons comprise locations where the standing seams are not sufficiently far apart, or too curved. Efficiency reasons may comprise locations that are permanently in the shade.

According to a third aspect of the invention, there is provided a method of controlling the internal climate of a building using the assembly as described above, wherein the solar energy which is absorbed at a first point in time at a first location is used to control the internal climate of the building at a second point in time and/or a second location.

This embodiment allows the building to be kept cool during the day by absorbing the solar energy falling on the roof and by storing the heat to be retrieved at a later time or to be used at a different location or as a different form of energy. The stored energy can be used to heat the building at colder times, or to provide hot water for domestic or industrial applications. The stored energy can also be used to increase the temperature of the ground water for retrieval using a heat pump system at a later time. Electricity produced in this embodiment may be used to power electrical climate control equipment in the building such as the air-conditioning unit.

According to a third aspect of the invention, there is provided a method of converting solar energy into energy of a different type using the assembly as described above, wherein the solar energy which is absorbed at a first point in time at a first location is used at a second point in time and/or a second location. Electricity produced in this embodiment may be used to power electrical equipment in the building, or it may be supplied to the electrical grid for use at another location. It may also be stored in accumulators for later use. Heat absorbed by thermal collector may be used in the building to provide hot water for domestic or industrial applications. It may also be stored in a thermal accumulator for later retrieval for heating purposes or for powering a heat pump system. This system may be used to heat the building in colder periods, or in periods of limited or no sunshine.

The invention will now be further described with reference to the following schematic and non-limitative drawings in which:
Fig. 1 shows a schematical perspective cross-section of an assembly according to the invention.
Fig. 2 shows a schematic representation of the application of an assembly according to the invention in a roof construction.
Fig. 3 shows a schematic cross-section of the box-shaped module as a thermal collector using gas such as air as a heat-absorbing medium.
Fig. 4 shows a schematic cross-section of the box-shaped module provided with a photovoltaic collector.
Fig. 5 shows a schematic cross-section of the box-shaped module as a thermal collector using a liquid or gaseous medium as a heat-absorbing medium.
Fig. 6 shows a schematic cross-section of the box-shaped module as a thermal collector using a liquid or gaseous medium as a heat-absorbing medium provided with a photovoltaic collector.
Fig. 7 shows a schematic cross-section of the box-shaped module comprising a thermal collector using a liquid or gaseous medium as a second heat absorbing medium embedded in phase change material as a first heat-absorbing medium.
Fig. 8 shows a schematic representation of the use of an assembly according to the invention on a building for controlling the internal climate of the building.

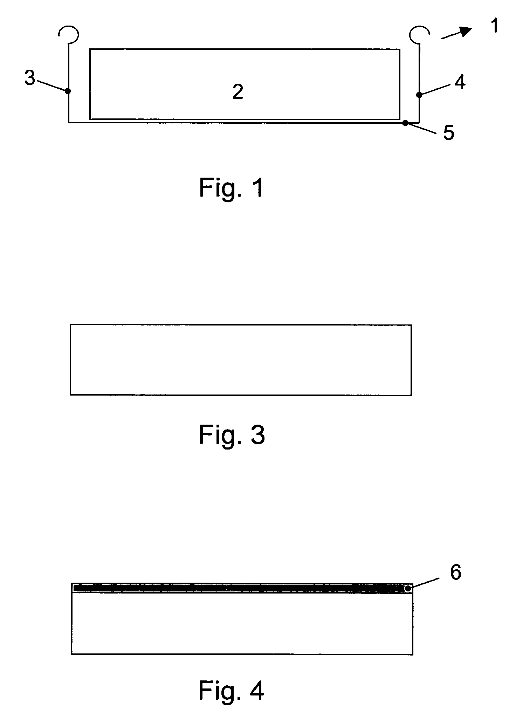

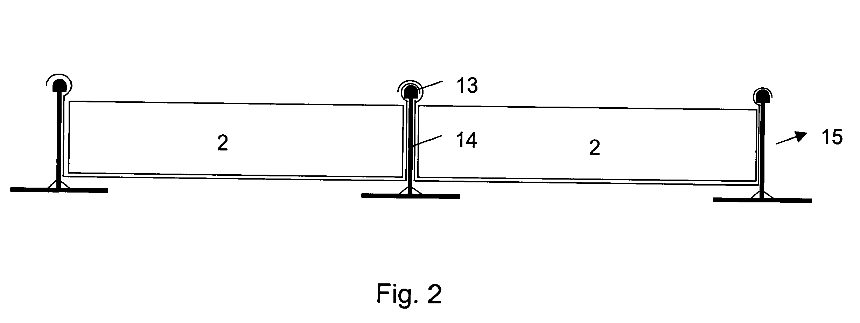

In figure 1 an assembly according to the invention is shown comprising a building member 1 for constructing a standing seam roof and an exchangeable, box-shaped module 2, the building member comprising upstanding flanges 3, 4 on opposite sides and a substantially flat intermediate portion 5 between the flanges 3, 4 which are designed so as to co-operate with flanges of adjacent building members to form the standing seam and wherein a module 2 is positioned in the intermediate portion 5 between the flanges 3, 4 and wherein the module 2 is provided with means for absorbing solar energy.

In figure 2 two adjacent building members are shown, each provided with an exchangeable, box-shaped module 2 in the intermediate portion 5. A standing seam is formed by the two adjacent flanges cooperating to form a seam, for instance by a male-female joint. In many cases a clip 15 is used to form the standing seam and to attach the roof to the underlying building structure. The standing seam in this example comprises a thicker head part 13 and a thinner connecting part 14 connecting the head part to the edges of the intermediate portion 5. In this drawing the modules are tightly wedged between the flanges of the building member, thereby securing the module.

Figure 3 shows a schematic cross-section of the exchangeable, box-shaped module 2 as a thermal collector using gas such as air as a heat-absorbing medium. When mounting the thermal collector on the roof, the heating of the gas by the solar energy will cause the gas to rise and thereby cause a natural flow of hot gas towards the top of the module. Since many roofs are somewhat tilted, this natural convection can be used to convey the heated gas to a heat exchanging unit or a thermal accumulator.

Figure 4 shows a schematic cross-section of an exchangeable, box-shaped module 2 provided with a photovoltaic collector 6. The solar energy is converted into electrical energy, which can be used for all sorts of known purposes. The module is mountable between the flanges of the building member in the assembly according to the invention instead of on top of the flanges. This way the module is sunk in between the flanges and thereby protected more effectively against the elements as compared to the conventional photovoltaic collectors that are mounted on top of the roofs clamped on top of the standing seams.

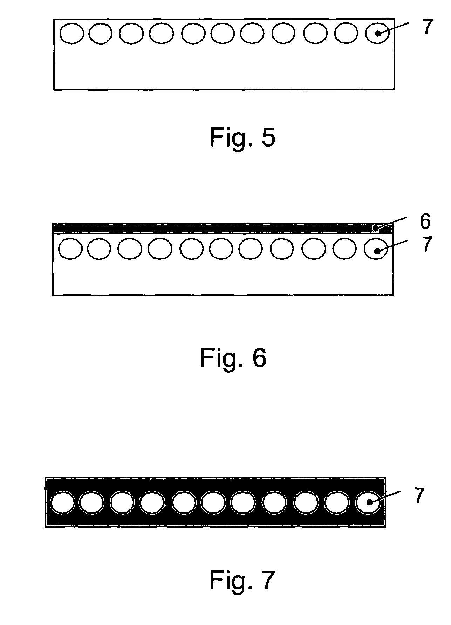

Fig. 5 shows a schematical cross-section of an exchangeable, box-shaped module as a thermal collector using a liquid or gaseous medium as a heat-absorbing medium, which is conducted through an internal piping circuit to at least one inlet conduit and at least one outlet conduit. The module is mountable between the flanges of the building member in the assembly according to the invention instead of on top of the flanges. This way the module is sunk in between the flanges and thereby protected more effectively against the elements as compared to the conventional thermal collectors that are mounted on top of the roofs clamped on top of the standing seams. When mounting a plurality of thermal collectors according to the invention, an outlet conduit of a first thermal collector may be connected to an inlet conduit of a second thermal collector. All thermal collectors may be connected to each other this way, thereby creating a series connection of collectors. At least one outlet conduit of this series connection of collectors is connected to a conduit 8 passing the heat-absorbing medium to the thermal accumulator 9 and at least one inlet conduit of this series connection of collectors is connected to a conduit 8 passing the heat-absorbing medium from the thermal accumulator to the thermal collector.

Fig. 6 shows a schematical cross-section of an exchangeable, box-shaped module as a thermal collector using a liquid or gaseous medium as a heat-absorbing medium, which is conducted through an internal piping circuit to at least one inlet conduit and at least one outlet conduit, the thermal collector also being provided with a photovoltaic collector. In this embodiment the advantages of a thermal collector and a photovoltaic collector are combined, thereby increasing the energy production of an area of roof.

Fig. 7 shows a schematic cross-section of an exchangeable, box-shaped module comprising a thermal collector using a liquid or gaseous medium which is conducted through an internal piping circuit to at least one inlet conduit and at least one outlet conduit as a second heat absorbing medium, the piping circuit being embedded in phase change material which acts as a first heat absorbing medium. The phase change material is able to absorb a large amount of energy without a significant increase in temperature, thereby shielding the building for a temperature increase. The energy is transferred to a second heat-absorbing medium, which can then be conducted to a thermal accumulator or a heat exchanger or an energy conversion unit.

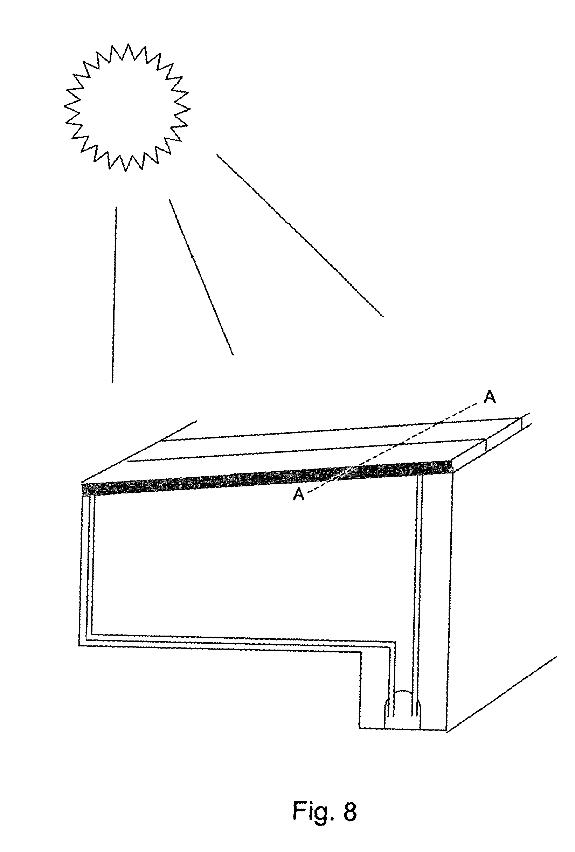

Fig. 8 shows a schematic representation of the use of an assembly according to the invention on a building for controlling the internal climate of the building. The solar heat, which is absorbed by the heat-absorbing medium, is conducted to a thermal accumulator and stored. The energy can then later be retrieved, for instance to heat the building. The ground and the groundwater below the building can also form the thermal accumulator. The heat stored in the ground can be retrieved later for heating purposes, and the cold groundwater can be fed through the thermal collectors on the roof. As a result the interior of the building is kept cool. In winter, the heat stored in the ground can be used to provide at least part of the heating of the building. Also, heat pump systems using groundwater temperature can be used in conjunction with the assembly according to the invention. The line indicated with A-A is a cross section of the roof, an example of which is given in figure 2.

Standing seam roofs are usually made from standardised parts. The distance between the upstanding flanges is therefore also standardised. Depending on the longitudinal curvature of the substantially flat intermediate portion the length of the modules may be chosen. Typical dimensions for these modules range from a width of about 25 cm to a width of about 100 cm. The length may be chosen between about 50 cm and the entire length of the roof. The thickness of the module may be chosen freely, but if the module is to be wedged tightly between the upstanding flanges of the building members forming the standing seam, the height is limited to at most the height of the thin section of the standing seam. In many cases the height is therefore limited between 3 cm and 10 cm.

It is of course to be understood that the present invention is not limited to the described embodiments and examples described above, but encompasses any and all embodiments within the scope of the description and the following claims.

## Claims

1. Assembly of a building member (1) for constructing a standing seam roof, and an exchangeable module (2), the building member (1) comprising upstanding flanges (3, 4) on opposite sides and a substantially flat intermediate portion (5) between the upstanding flanges (3, 4), the upstanding flanges (3, 4) being designed so as to co-operate with upstanding flanges of adjacent building members and form the standing seam, **characterised in that** the module (2) is mounted in the intermediate portion (5) between the upstanding flanges (3, 4) and wherein the module (2) is provided with means for absorbing solar energy.

2. Assembly according to claim 1, wherein the exchangeable module is box-shaped.

3. Assembly according to claim 1 or 2, wherein the exchangeable module (2) is wedged, preferably tightly wedged, between the upstanding flanges (3, 4) of the building member (1).

4. Assembly according to any one of claims 1 to 3, wherein the exchangeable module (2) is fastenable to the building member (1) using fastening means.

5. Assembly according to any one of claims 1 to 4, wherein the means for absorbing solar energy comprise a photovoltaic collector (6).

6. Assembly according to any one of claims 1 to 5, wherein the means for absorbing solar energy comprise a thermal collector (7) for heating a heat-absorbing medium.

7. Assembly according to claim 6, wherein the assembly also comprises conduits (8) for conducting the heat absorbing medium between the thermal collector (7) and a thermal accumulator (9) for storing thermal energy.

8. Assembly according to claim 6 or 7, wherein the heat absorbing medium and/or the thermal accumulator (9) comprises a phase change material for storing and retrieving thermal energy.

9. Exchangeable module (2), preferably box-shaped, for mounting between upstanding flanges (3, 4) of a standing seam roof according to any one of claims 1 to 3, wherein the module comprises means for absorbing solar energy.

10. Module according to claim 9, wherein the module (2) comprises a thermal collector (7) for heating a heat absorbing medium and/or a photovoltaic collector (6).

11. Module according to claim 9 or 10, wherein the module (2) comprises at least one input conduit (10) and at least one output conduit (11) for conducting the heat absorbing medium, wherein the heat absorbing medium after having absorbed solar energy, is passable to a thermal accumulator (9) or to a conversion unit (12) wherein the solar energy is convertible into energy of a different type.

12. Module according to any one of claims 9 to 11, wherein the heat-absorbing medium comprises phase change materials.

13. Method of controlling the internal climate of a building using the assembly according to any one of claims 1 to 8, wherein the solar energy which is absorbed at a first point in time at a first location is used to control the internal climate of the building at a second point in time and/or a second location.

14. Method of converting solar energy into energy of a different type using the assembly according to any one of claims 1 to 8, wherein the solar energy which is absorbed at a first point in time at a first location is used at a second point in time and/or a second location.
